(19) Europäisches Patentamt / European Patent Office / Office européen des brevets

(11) **EP 3 921 111 B1**

(12) **EUROPEAN PATENT SPECIFICATION**

(45) Date of publication and mention of the grant of the patent:
**25.10.2023 Bulletin 2023/43**

(21) Application number: **20701104.0**

(22) Date of filing: **09.01.2020**

(51) International Patent Classification (IPC):
**B23K 26/53** *(2014.01)*     **B23K 26/03** *(2006.01)*
**B28D 5/00** *(2006.01)*

(52) Cooperative Patent Classification (CPC):
**B23K 26/53; B23K 26/03; B28D 5/00;**
B23K 2103/50

(86) International application number:
**PCT/GB2020/050050**

(87) International publication number:
**WO 2020/161462 (13.08.2020 Gazette 2020/33)**

(54) **LASER MACHINING INSIDE MATERIALS**

LASERBEARBEITUNG VON INNENMATERIALIEN

USINAGE AU LASER DE L'INTÉRIEUR DE MATÉRIAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2019 GB 201901635**

(43) Date of publication of application:
**15.12.2021 Bulletin 2021/50**

(60) Divisional application:
**23197543.4**

(73) Proprietor: **Opsydia Limited**
**Oxford Oxfordshire OX5 1PF (GB)**

(72) Inventors:
• **MYLES, David**
  **Oxford Oxfordshire OX5 1PF (GB)**
• **FISH, Lewis**
  **Oxford Oxfordshire OX5 1PF (GB)**
• **SALTER, Patrick**
  **Oxford Oxfordshire OX5 1PF (GB)**
• **BOOTH, Martin**
  **Oxford Oxfordshire OX5 1PF (GB)**

(74) Representative: **Murgitroyd & Company**
**Murgitroyd House**
**165-169 Scotland Street**
**Glasgow G5 8PL (GB)**

(56) References cited:
**EP-A2- 0 545 133     WO-A1-2017/130111**
**US-A- 4 200 506**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>Field</u>

The invention relates to a laser system for laser machining inside materials, particularly a system for forming a modified region within a sample. The laser system is particularly useful for marking gemstones, especially diamond gemstones.

<u>Background</u>

Laser machining is a process that is used widely in industry. Research developments in this area over the last decade or so have moved laser processing to much smaller length scales. This has been enabled by the use of pulsed lasers using pulse durations in the range of hundreds of femtoseconds to a few picoseconds and focussing through high numerical aperture lenses. The combination of energy confinement in the time and spatial dimensions leads to high instantaneous focal intensities that create material modifications through nonlinear optical processes. Processing effects may therefore be confined to focal regions.

It is therefore desirable to improve control over the size and shape of laser foci within a material in order to improve the degree of control afforded to laser machining techniques. However, the presence of a material in the path of a laser beam necessarily affects the laser (e.g. by refraction and/or reflection).

Consequently, when trying to focus within a material, the material itself disrupts the laser focussing within the material.

Simmonds et al. (Optical Express, vol. 19, 12 November 2011) have previously described three dimensional laser microfabrication in diamond using a dual adaptive optics system. It is described that femtosecond laser fabrication of controlled three dimensional structures deep in the bulk of diamond is facilitated by a dual adaptive optics system. A deformable mirror is used in parallel with a liquid crystal spatial light modulator to compensate the extreme aberrations caused by the refractive index mismatch between the diamond and the objective immersion medium. It is shown that aberration compensation is important for the deterministic creation of micron scale features at depths greater than $50\mu$m, and the dual adaptive optics approach demonstrates increased fabrication efficiency relative to experiments using a single adaptive element.

WO2017/130111 A1 describes a method for laser processing of transparent or partially transparent materials by focussing laser radiation on a surface or inside a material workpiece to create elongated processed regions and compensating aberrations induced while focussing light within the workpiece. This document discloses the preamble of claim 1.

US 4,200,506 describes a method of providing permanent identification markings to gemstones by irradiating the gemstone with protons in a desired pattern.

<u>Summary</u>

Light focussed from an objective lens into a sample will be aberrated from its ideal focus because of refraction at the sample's surface. The larger the difference between the refractive indices of the immersion medium (e.g. air, oil, etc.) and the sample, the larger the aberrating effect on the focus. The determined correction therefore accounts for the effects of refraction at the sample surface in order to counteract the destructive aberrating effect of the sample. Different factors can contribute to different types of aberrations (or aberration modes) on the focus.

Spherical aberration is caused by the mismatch in the refractive index of the sample and the immersion medium of the focusing objective lens. Spherical aberration leads to a loss of resolution and power efficiency of fabrication, and increases with focussing depth. This problem is particularly pronounced for fabrication in diamond due to the material's high refractive index (2.4) and the need to use high numerical aperture (NA) optics to obtain the highest resolution. As described in the background section, Simmonds et al. present a dual adaptive optics approach that compensates for the depth dependent spherical aberration, enabling the fabrication of compact features deep within a high refractive index sample such as diamond.

Another type of aberration is known as coma aberration. A surface which is tilted with respect to a focussing objective lens will not typically permit an ideal focus and instead will distort the focus by coma aberration. Usually the incident surface is levelled as far as possible and the resulting distortion is accepted, but for some applications (e.g. focussing inside a gem stone) it may be difficult to obtain a perfectly level surface, or it may be advantageous to focus through a tilted surface. Hence, by measuring the tilt of the sample, its effects on the focus can be counteracted by applying a correction.

It has thus been realized that for precise sub-surface machining of materials, particular those having a high refractive index such as diamond gemstones, it is desirable to correct for both spherical aberration and coma aberration to improve focussing efficiency. Spherical aberration can be corrected by one or more optical elements. For coma aberration, a laser system is provided which includes a tilt measurement device configured to measure a tilt angle of the surface of the sample relative to an optical axis of the laser light entering through the surface. Coma aberration due to the tilt angle can then be corrected. One option is to use an active optical element to correct for both spherical aberration and coma aberration. However, another option involves de-coupling the spherical aberration correction from the coma aberration correction. One or more optical elements can be provided including a component configured to correct for spherical aberration caused by mismatch in refractive index at the surface of the sample through which the laser light enters the sample such that the laser light is focused at the target location within the sample. Furthermore, a tilt measurement device can be provided which is configured to measure a tilt angle of the surface of the sample relative to an optical axis of the laser light entering through the surface, and a drive mechanism is provided for moving the sample holder and/or one or more of the optical elements based on the measured tilt angle to correct for coma aberration caused by the tilt angle.

Thus, according to one configuration as described herein there is provided a laser system for modification of a sample to form a modified region at a target location within the sample, the target location being disposed below a surface of the sample, the laser system comprising:

a laser light source configured to provide laser light;
a sample holder for supporting the sample;
one or more optical elements configured to direct the laser light from the laser light source into the sample when the sample is supported by the sample holder, wherein the one or more optical elements are configured to focus the laser light into the sample, and wherein the one or more optical elements includes a component configured to correct for spherical aberration caused by mismatch in refractive index at the surface of the sample through which the laser light enters the sample such that the laser light is focused at the target location within the sample,
a tilt measurement device configured to measure a tilt angle of the surface of the sample relative to an optical axis of the laser light entering through the surface,
and a drive mechanism for moving the sample holder and/or one or more of the optical elements based on the measured tilt angle to correct for coma aberration caused by the tilt angle.

The drive mechanism can be configured to move the sample holder based on the measured tilt angle to reduce the tilt angle of the surface of the sample and thus correct for coma aberration. That is, the sample holder can be rotated to reduce or eliminate the tilt of the sample and thus reduce or eliminate coma aberration. Alternatively, or additionally, the drive mechanism can be configured to move one or more of the optical elements in order to tilt the optical axis of the laser light entering through the surface of the sample thus reducing the tilt angle and correcting for coma aberration. For example, one or more of the optical elements may be rotated to reduce or eliminate the tilt of the laser light relative to the surface of the sample and thus reduce or eliminate coma aberration.

Alternatively still, the drive mechanism can be configured to move one or more of the optical elements to create an amount of coma which cancels sample induced coma aberration caused by the tilt angle. In this case, the title angle is not eliminated but rather the sample induced coma aberration caused by the tilt is compensated by introducing an equal and opposite amount of coma into the laser light.

As such, it will be appreciated that the coma aberration can be reduced or eliminated by mechanically moving (rotating and/or translating) the sample and/or one or more optical elements in the laser system based on a tilt measurement.

The spherical aberration can also be corrected in several different ways. In one configuration, the one or more optical elements includes a lens with an adjustable correction collar to correct for spherical aberration within the sample at the target location. Alternatively, the one or more optical elements may include a lens with a fixed correction for spherical aberration within the sample at the target location. Alternatively still, the one or more optical elements can include a lens and a phase plate configured to correct for spherical aberration within the sample at the target location. Yet another alternative is that the one or more optical elements includes a combination of lenses configured to introduce a spherical aberration in the laser light which is partially or wholly cancelled by spherical aberration caused by mismatch in refractive index at the surface of the sample. Yet another alternative is that the one or more optical elements includes an adaptive optical element configured to correct for spherical aberration within the sample at the target location. The adaptive optical element (or active optical element) can include a spatial light modulator (SLM). Examples of spatial light modulators include liquid crystal SLMs such as liquid crystal on/over silicon SLMs (LCOS SLMs). Other examples include mirror-based adaptive optical element such as digital micro-mirror devices / deformable mirror devices. Sometimes these mirror based devices may also be referred to as mirror based SLMs. As such, spatial light modulator may be used an umbrella term for such devices and is not necessarily limited to liquid crystal and mirror based SLM devices.

The one or more optical elements can be pre-configured to correct for spherical aberration within a specific type of material at a fixed target depth. Alternatively, the one or more optical elements are adjustable to correct for spherical aberration within different sample materials and/or at different target depths. For example, the laser system can include a spherical aberration controller configured to automatically adjust the one or more optical elements to correct for spherical aberration based on one or both of a database of available corrections and an optical measurement of the sample.

It is advantageous if the laser light source is configured to provide sub-10 picosecond, more preferably less than 1 picosecond, pulsed laser light. Precisely focusing ultrashort pulsed laser light enables accurate sub-surface materials processing without modifying the surface of the sample. The laser light source can also be configured to provide pulsed laser light with pulse energies of between IOnJ and 300nJ. The specific energy will be dependent on the material sample to be processed.

Furthermore, the one or more optical elements are configured to focus the laser light within the sample with a numerical aperture of at least 0.8, 1, or 1.2. For highly repeatable deterministic marking, the laser should be focused at high numerical aperture beneath the sample surface. This could be with an air, water or oil immersion objective lens. However, when focusing beneath the sample surface at high numerical aperture, aberrations are a major concern. Hence the need for correction as described herein.

The laser system can be configured to mark gemstones such as diamonds. In this regard, the optics and control hardware/software can be pre-configured to mark such gemstones. For example, the sample holder can be configured to hold gemstones and the optics can be configured for a specific gemstone material such as diamond.

One advantageous feature of the systems and methods as described herein is that they are capable of efficiently machining exceedingly small marks and also larger marks at a range of different depths within a material such as diamond. This can be advantageous for security marking of diamond gemstones. It is considered advantageous to be able to provide a mark which is visible under a 10x magnification loupe in order to identify a diamond gemstone. However, such visible marks could potentially be copied. As such, to increase security, the system as described herein is also capable of providing a second mark that is not visible under a 10x magnification loupe but which is visible under higher magnification.

In light of the above, the laser system may be utilised to provide a diamond gemstone comprising:

a first mark disposed at a first depth below a surface of the diamond gemstone; and
a second mark disposed at a second depth below the surface of the diamond gemstone,
wherein the first mark is visible under a 10x magnification loupe, and
wherein the second mark is not visible under a 10x magnification loupe but which is visible under higher magnification.

The first mark and the second mark can be disposed at different depths below the surface. For example, the difference in depth of the first and second marks can be at least 30 micrometres. Furthermore, the first mark and the second mark can overlap when viewed through the surface. In this regard, the system as described herein is capable of manufacturing such marks with significantly different sizes and at significantly different depths. By providing the marks in the same lateral position but at different depths, the first visible mark can be used to locate the second mark which is only visible under higher magnification and thus more difficult to find without the first mark as a guide.

The first mark may comprise at least one line or dot having a width parallel to the surface of greater than 2 micrometres and/or a plurality of lines with a separation less than 10 micrometres in a direction parallel to the surface. The overall size of the first mark may be greater than 100 micrometres, more preferably greater than 200 micrometres. In contrast, the second mark may consists of one or more lines or dots having a width parallel to the surface of no more than 2 micrometres, more preferably no more than 1 micrometre.

It should be noted that the configurations as described above reduce or eliminate coma aberration by mechanically moving (rotating or translating) the sample and/or one or more optical elements in the laser system based on a tilt measurement. This contrasts with an alternative configuration in which an active optical element, such as a spatial light modulator (SLM), is used to correct for coma aberration. In such an alternative configuration: a sample is positioned in a laser system for modification by a laser; tilt of a surface of the sample through which the laser focusses is measured; using at least the measured tilt, a correction to be applied to an active optical element of the laser system is determined; and the correction to the active optical element is applied to modify wavefront properties of the laser to counteract an effect of coma on laser focus such that laser modifying the sample at the target location uses the laser with the corrected wavefront properties to produce the modified region. In one configuration, an active optical element such as an SLM can be used to correct for both spherical aberration and coma aberration. However, the configurations as described herein decouple these aberration corrections such that a mechanical drive mechanism is provided for moving the sample holder and/or one or more of the optical elements based on the measured tilt angle to correct for coma aberration caused by the tilt angle whereas spherical aberration can be corrected by other one or more of the other methods described herein. This may be advantageous in certain applications. For example, in applications where available active optical elements (e.g. spatial light modulators) lack sufficient range or degrees of freedom to correct for aberrations. In certain applications the mechanical drive methodology may be provided in combination with active optical elements to increase the range and degrees of freedom of the laser system to correct aberrations.

Brief Description of the drawings

To assist understanding of the present disclosure and to show how embodiments may be put into effect, reference is made by way of example to the accompanying drawings in which:

Figure 1 shows a schematic of a portion of a laser system illustrating sample tilt which introduces coma aberration;

Figure 2 shows a schematic of a laser system including a laser, two optical elements, and a sample holder supporting a sample;

Figure 3 shows the laser system of Figure 2 illustrating that the sample holder (and sample supported by the sample holder) can be configured to rotate in order to reduce or eliminate sample tilt and thus correct coma aberration;

Figure 4 shows the laser system of Figure 2 illustrating that the optical components of the system can be configured to rotate in order to reduce or eliminate sample tilt (relative to the laser light) and thus correct coma aberration;

Figure 5 shows a schematic of a laser system including a laser, three optical elements, and a sample holder supporting a sample, wherein at least one of the optical elements can be moved to create an amount of coma which cancels sample induced coma aberration caused by a tilt angle;

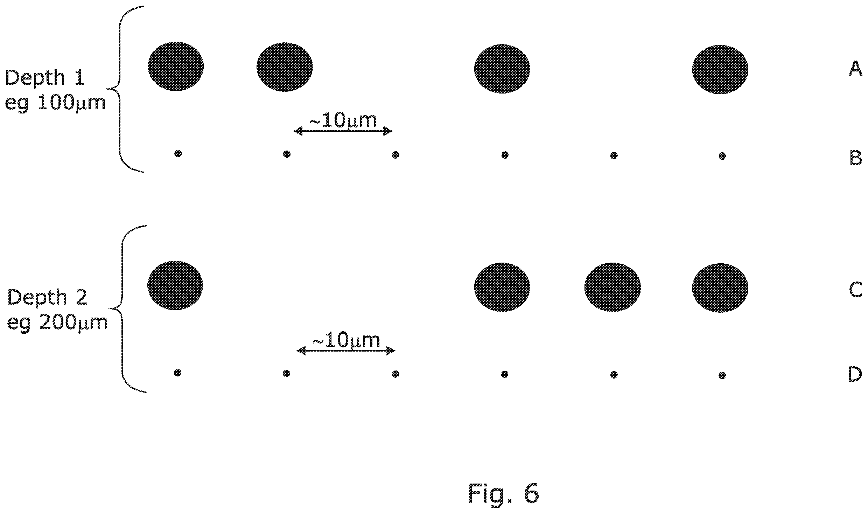

Figure 6 is a schematic illustrating markings formed within a diamond sample at two different depths and with varying degrees of aberration correction: (A) depth 1, e.g. 100 micrometres, no aberration correction, high pulse number e.g. 10,000, high pulse energy, large non-deterministic marking; (B) depth 1, aberration correction applied, low pulse number e.g. 5, low pulse energy, small deterministic marking; (C) depth 2, e.g. 200 micrometres, same aberration correction applied as B, high pulse number, e.g. 10,000, high pulse energy, large non-deterministic marking; (D) depth 2, new aberration correction applied for depth 2 compared to B, low pulse number e.g. 5, low pulse energy, small deterministic marking;

Figures 7A, 7B, 7C, and 7D show a graphitic track written inside a diamond substrate from different perspectives;

Figure 8A shows a schematic example of a distorted focus within a substrate without using aberration correction;

Figure 8B shows a schematic example of a focus within a substrate achieved using aberration correction;

Figures 9A and 9B show features written in a diamond substrate, the left-hand set of features were written using an aberration correction technique, while the right-hand set of features were written without using an aberration correction technique; and

Figure 10 shows another laser system for laser modification of a sample.

Detailed Description

The present specification describes laser systems configured to apply aberration correction for high numerical aperture laser marking in the bulk of samples such as diamond and other gemstones.

Focusing an ultrashort (sub 10ps, preferably sub-picosecond) pulsed laser beneath the surface of diamond, it is possible to make isolated visible marks without any modification to the diamond surface. The combination of tight focusing and short pulse length leads to an electric field at focus which is sufficiently high for non-linear absorption of light, either through a multiphoton absorption or a tunnelling ionization, followed by an avalanche ionization. The non-linear nature of the process means that the structural modification is confined to the focal volume of the laser, without damage to surrounding regions or the surface of the material sample. The ultrashort nature of the pulse means all energy is delivered to the modification before any can diffuse via heat making very small sub-micron marks possible.

When the laser breaks down the diamond lattice, it induces small pockets of sp2 bonded carbon which cause high local stresses, and are accompanied by local cracking of the diamond primarily along 111 planes. The marks appear as dark (opaque) against a transparent background. This is in part due to absorption from the graphitised regions but also scatter from the local nonuniformity in the structure.

The laser written marks can be used as permanent features for the identification or hall marking of diamond gem stones, using a QR code™ or other type of code, pattern, serial number, or other unique design. Since the marks are conductive, they can also be used as laser written wires. They create local strain generating birefringence in the diamond so can also be used to create optical structures such as waveguides.

For highly repeatable deterministic marking, the laser should be focused at high numerical aperture beneath the diamond surface. This could be with an air, water or oil immersion objective lens. Typically the numerical aperture NA should be above 0.8, preferably above 1, and most preferably above 1.2. Numerical apertures are typically less than 2.0, more typically no more than 1.5.

When focusing beneath the diamond surface at high numerical aperture, aberrations are a major concern. There is significant refraction of light rays at the diamond surface due to the large refractive index difference, which is high regardless of the immersion medium chosen for the objective lens. Rays incident at different angles are refracted by different amounts, due to Snell's law, and hence no longer perfectly overlap in phase at the focus. Thus the system is no longer limited purely by diffraction and the laser focus is distorted. The distortion of the laser focus loses resolution and counteracts the effect of using a high NA lens.

When aberrated, the laser fabrication beneath the diamond surface becomes erratic, uncontrolled and it is impossible to deterministically create sub-micron marks (sub-micron in the transverse direction perpendicular to the optic axis of the system) at a given pulse energy and dose. The aberration is mainly spherical in nature from the refraction at the diamond surface. The amount of spherical aberration can be analytically calculated (see Booth, 1998, Journal of Microscopy). It is seen that the aberration increases with the depth inside the sample, the NA of the focusing lens, and the refractive index (RI) mismatch.

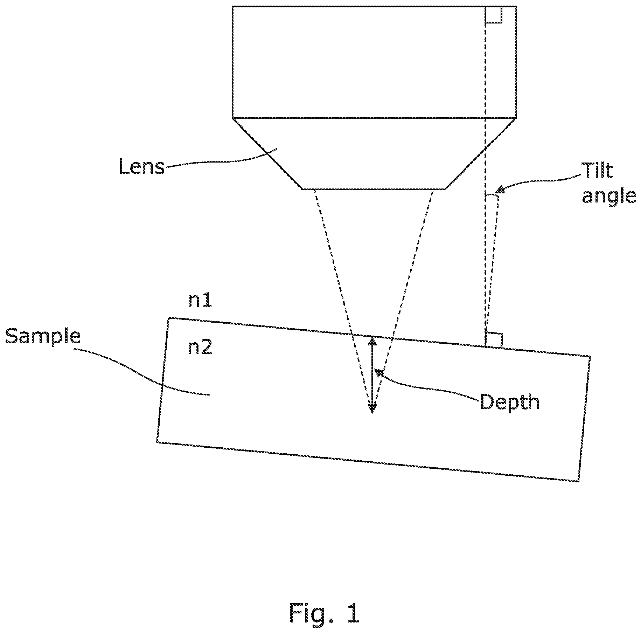

Another important aberration is a first order coma, which is related to a tilt of the interface through which the laser is focused, such that it is not perfectly perpendicular to the optic axis of the system. Figure 1 shows a schematic of a portion of a laser system illustrating sample tilt which introduces coma aberration.

It has been shown previously (see Simmonds, Optic Express, 2011 and Salter Booth patent application, 2017) that these aberrations can be successfully corrected using adaptive optical elements, such as a liquid crystal spatial light modulator (SLM), to impose an equal and opposite phase distribution to the laser beam prior to the objective, restoring diffraction limited performance at focus and enabling highly repeatable deterministic marking of sub-micron features at a given pulse energy and dose.

While the adaptive optics aberration correction provides a flexible solution to deterministic laser marking inside diamond, it is not the only solution. As described herein, there are other practical implementations that can provide close to aberration free performance and reliable laser marking.

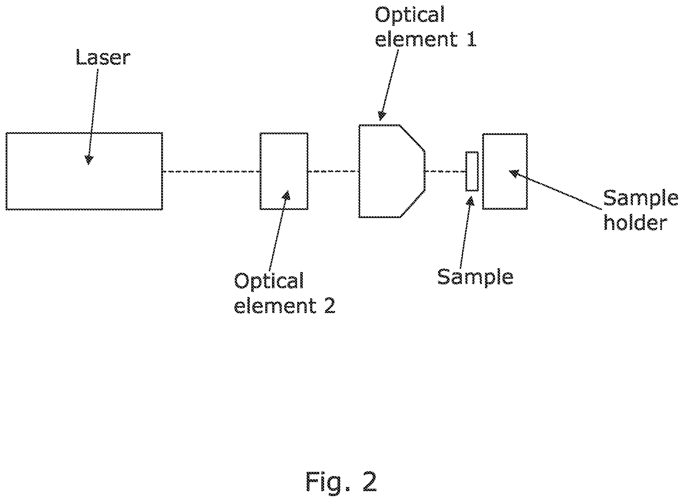

Figure 2 shows a schematic of a laser system including a laser, two optical elements, and a sample holder supporting a sample. Instead of using an adaptive optical element to correct the depth dependent spherical aberration, other options are available:

a. Many microscope objective lenses can be purchased which contain a correction collar to remove spherical aberration when focusing inside glass. Typically a glass element inside the lens can move along the optical axis as the collar is rotated, adjusting the spherical aberration to that for a particular depth inside glass. This spherical aberration phase can be approximated to that at a different depth focused inside a gem, and then used to provide reduced spherical aberration at that depth.

b. Many microscope objective lenses can be purchased which have air as an immersion medium and have a fixed correction for a particular depth inside glass. This spherical aberration phase can be approximated to a different depth focused inside a gem, and then used to provide reduced spherical aberration at that depth.

c. A fixed phase plate may be purchased which displays any arbitrary phase desired. Thus, it is possible to calculate the required phase for a particular depth and objective lens, then use the phase plate in conjunction with that lens for focusing at that depth inside the gem without spherical aberration.

d. A combination of lenses prior to the objective lens may be aligned and adjusted in a manner similar to (a), in order to provide a spherical aberration in the laser beam prior to the objective which is partially or completely cancelled by the spherical aberration generated by refraction at the diamond interface.

Furthermore, instead of using an adaptive optical element to correct the depth dependent coma aberration related to sample tilt, other options are available:

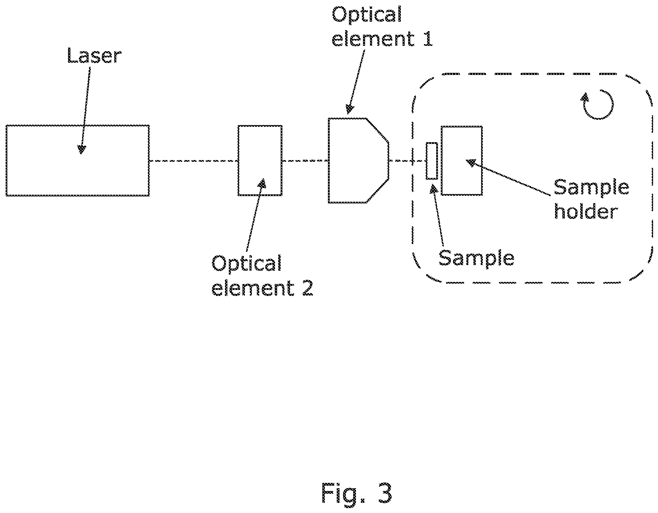

a. A mechanism for measuring the tilt of the sample (for example an optical microscope) and then adjusting the tilt of the sample with a mechanical mount such as a goniometer or tip/tilt stage until the tilt is less than a particular value, ideally less than 0.5 degrees, but also less than 1 degree and certainly less than 2 degrees. Figure 3 shows the laser system of Figure 2 illustrating that the sample holder (and sample supported by the sample holder) can be configured to rotate in order to reduce or eliminate sample tilt and thus correct coma aberration.

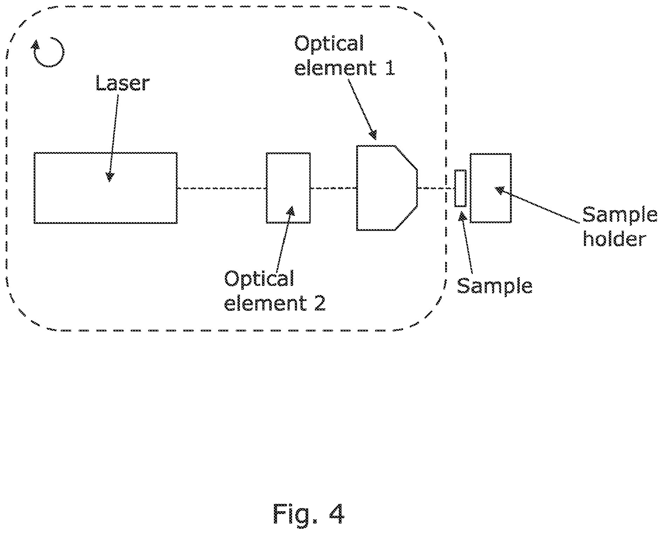

b. A mechanism for measuring the tilt of the sample (for example an optical microscope) and then a mechanical mechanism for adjusting the tilt of the objective lens relative to the sample to less than the values described above. As the lens is tilted, the angle of the laser and/or other optical components may also be changed such that the laser beam remains perpendicular to a back axis of the objective lens. Figure 4 shows the laser system of Figure 2 illustrating that the optical components can be configured to rotate in order to reduce or eliminate sample tilt and thus correct coma aberration.

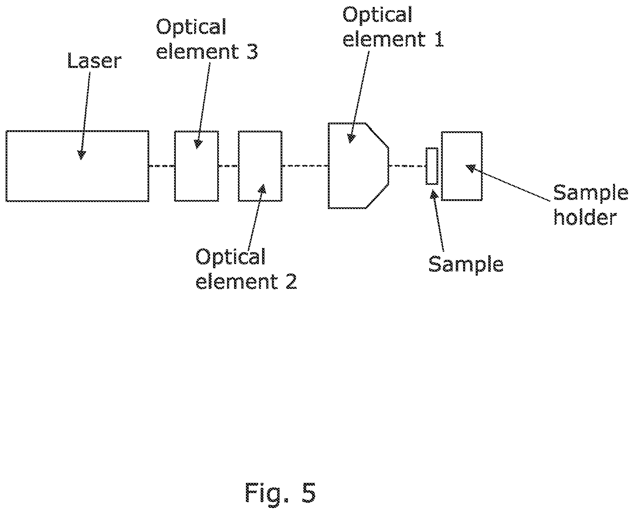

c. Fixed optical elements, such as lenses, are also able to generate coma aberration. Once the tilt of the sample has been measured, the coma aberration can be compensated by translating a lens perpendicular to the optic axis to create the required amount of coma to cancel the sample induced aberration. Figure 5 shows a schematic of a laser system including a laser, three optical elements, and a sample holder supporting a sample, wherein at least one of the optical elements can be moved to create an amount of coma which cancels sample induced coma aberration caused by a tilt angle.

d. A spatial light modulator (SLM) or other adaptive / active optical element to correct (only) for depth dependent spherical aberration and a mechanical mount to remove sample tilt and coma aberration. For example, one of the optical elements in the laser system of Figure 5 can be an SLM configured to correct for spherical aberration.

Configurations and methods as described herein provide correction/removal of both spherical and coma aberration for accurate deterministic marking inside samples such as gemstones. Any of the previously described options may be combined into a system for gemstone marking. The laser system also comprises an ultrashort pulse laser, a high NA objective lens, and a 3D translation stage for mounting the gem sample. Spherical aberration correction may be achieved using a fixed element to allow marking at a specified depth for a specified material. However, coma aberration correction will require some adaptability to account for errors in sample mounting.

Figure 6 is a schematic illustrating markings formed within a diamond sample at two different depths and with varying degrees of aberration correction.

Figure 6(A) illustrates markings at a depth 1, e.g. 100 micrometres, with no aberration correction applied. The laser focus within the diamond sample is elongate in a depth direction with reduced energy density. As such, a high pulse number, e.g. 10,000, and a high pulse energy is required to form markings in the diamond sample. The result is large, non-deterministic markings as illustrated.

In contrast, Figure 6(B) illustrates markings at a depth 1 with aberration correction applied as described herein. The laser is precisely focused within the diamond sample requiring a low pulse number, e.g. 5, and a low pulse energy to form markings in the diamond sample. The result is small, deterministic markings as illustrated.

Figure 6(C) illustrates markings at a depth 2, e.g. 200 micrometres, with the same aberration correction applied as B. Due to the increase in depth, the aberration correction is insufficient. As such, the laser focus within the diamond sample is elongate in a depth direction with reduced energy density. As such, a high pulse number, e.g. 10,000, and a high pulse energy is required to form markings in the diamond sample. The result is large, non-deterministic markings as illustrated.

Finally, Figure 6(D) illustrates markings at a depth 2 with a new aberration correction applied for depth 2 compared to B. The laser is precisely focused within the diamond sample requiring a low pulse number, e.g. 5, and a low pulse energy to form markings in the diamond sample. The result is small, deterministic markings as illustrated.

It will thus be evident that an advantageous feature of the systems and methods as described herein is that they are capable of efficiency machining exceedingly small marks and also larger marks at a range of different depths within a material such as diamond. This can be advantageous for security marking of diamond gemstones. It is considered advantageous to be able to provide a mark which is visible under a 10x magnification loupe in order to identify a diamond gemstone. However, such visible marks could potentially be copied. As such, to increase security, the system as described herein is also capable of providing a second mark which is not visible under a 10x magnification loupe but which is visible under higher magnification.

In light of the above, that is also provided a diamond gemstone comprising:

a first mark disposed at a first depth below a surface of the diamond gemstone; and
a second mark disposed at a second depth below the surface of the diamond gemstone,
wherein the first mark is visible under a 10x magnification loupe, and
wherein the second mark is not visible under a 10x magnification loupe but which is visible under higher magnification.

The first mark and the second mark can be formed of graphitic sp2 carbon within an sp3 carbon diamond lattice. The marks of different size can be readily fabricating using the laser system as described herein. The first mark and the second mark can be disposed at different depths below the surface. For example, the difference in depth of the first and second marks can be at least 30 micrometres. Furthermore, the first mark and the second mark can overlap when viewed through the surface. In this regard, the system as described herein is capable of manufacturing such marks with significantly different sizes and at significantly different depths. By providing the marks in the same lateral position (at least within the same viewing frame) but at different depths, the first visible mark can be used to locate the second mark which is only visible under higher magnification and thus more difficult to find without the first mark as a guide.

The first mark may comprise at least one line or dot having a width parallel to the surface of greater than 2 micrometres and/or a plurality of lines with a separation less than 10 micrometres in a direction parallel to the surface. The overall size of the first mark may be greater than 200 micrometres. In contrast, the second mark may consists of one or more lines or dots having a width parallel to the surface of no more than 2 micrometres, more preferably no more than 1 micrometre.

The disclosed system and method of aberration correction can achieve a laser focus within the sample having a Strehl ratio of greater than 0.5. The method may include modifying the sample using a laser focus with a Strehl ratio of greater than 0.5. The focus may have a Strehl ratio of greater than 0.6, greater than 0.7, greater than 0.8, or greater than 0.9. The Strehl ratio may be understood as a measure of how close a focus is to its ideal (i.e. diffraction limited) focus. A laser focus limited only by the inherent diffraction of the focussing system (i.e. a laser focus the size of the diffraction limit) would have a Strehl ratio of 1. In practice, inherent flaws in an optical system will result in a focus which is not the size of the diffraction limit and which will therefore have a Strehl ratio of less than 1. A Strehl ratio of about 0.1 is typical for a laser focussed at e.g. a depth of $100\mu$m in a diamond sample for a high NA lens. The Strehl ratio may therefore be understood as a measure of the effect of aberration on a laser focus, with ratios closer to 1 being less affected by aberrations and flaws in the system. It may also be understood as a measure of the efficiency of a given focus.

The Strehl ratio may be defined as the peak focal intensity relative to that when there are no aberrations present in the system. When a focus simply limited by diffraction has a peak intensity $I_0$ and a real system has peak intensity $I_p$ the Strehl ratio is defined as the ratio $I_p/I_0$. If aberrations are present in a system, wavefront errors diffract light away from the focus and reduce the actual peak intensity $I_p$ from the theoretical maximum $I_0$, thus reducing the Strehl ratio. If the wavefront error is characterised as an aberration phase function $\psi$, the Strehl ratio S is given by:

$$S = \frac{I_p}{I_0} = \left| \langle e^{i\varphi} \rangle \right|^2$$

where the angled <...> brackets denote an average over a particular aperture in the optical system, taken here as the pupil aperture of the focussing objective lens. For a perfect system, the wavefront error is zero (flat phase) and the Strehl ratio is 1. If the wavefront error increases due to aberration the Strehl ratio decreases. The aberration function describes all phase errors related to the propagation of light toward the focus, and may be written as a sum of Zernike polynomials such as primary coma, primary spherical and primary astigmatism. The aberration function may alternatively be composed as a sum of another set of basis functions, or as a direct numerical computation/analytical solution for a particular focussing location inside a known sample.

The method may comprise measuring a focus of the laser within the sample, for example by photoluminescence within the sample, and modifying the correction applied to the active optical element based on the measured focus to thereby improve the efficiency of the focussing and/or to increase the Strehl ratio of the focus.

The sample may comprise a flat surface through which laser light will be incident and which will cause the aberration.

A modified region may be any region within the sample that has undergone change due to exposure to the laser. Typically, a modified region will comprise different properties and may comprise different optical, structural, mechanical, electrical etc. properties from the bulk material surrounding it.

An active optical element is any element which may dynamically modify the properties of light incident thereon. For example, liquid crystal spatial light modulators (SLMs), deformable mirrors (or micro-deformable mirrors), and adaptive lenses are active optical elements which may be used to dynamically impose spatially varying modulations on a laser beam's profile to thereby control e.g. its phase and/or propagation properties.

Measuring tilt of the sample may include measuring the inclination of the sample surface from the propagation of the laser beam, and/or may include measuring the inclination (i.e. tilt) with respect to both horizontal directions (i.e. the two orthogonal dimensions transverse to the laser beam propagation). Measuring tilt of the sample may include measurement of the inclination of the sample surface from a transverse plane of the objective lens. Measurement of the sample therefore provides information on what aberrations will affect the system focus.

Measurement may be carried out by any suitable means, and may include reflection from the sample surface. Measurement may include reflection from a plurality of points on the sample incident surface.

The measurement may be done by imaging. The correct axial position for optimum focus (i.e. sharpest image) of the surface of the sample may be found at three different locations. This may be accurate axially to about $0.5\mu$m. The three points may be separated in the transverse direction by about 0.2mm. The separation distance may be large enough to make an accurate measurement of the tilt, given the range of tilts which are expected to be important. For example, for diamond tilt in the range greater than 0.5 degrees may have significant effects on the quality of a focus within the sample.

Other methods may be used for doing the measurement. If the system is using an oil immersion objective, a similar method may be used to perform the same measurement as above but instead of using the sharpest focus to ascertain the axial position of the sample surface (which can be a problem with some samples as the surface can be polished so there is nothing clear to image), the laser can be used to boil the immersion oil. That is, when the laser focus is inside the immersion oil, it boils the oil, and when the laser focus moves inside the sample nothing is visible. In this case, the pulse energy would be below the threshold for fabrication within the sample. This approach has roughly the same axial accuracy as the imaging approach, but may be easier to implement in some cases. However, it only works for oil based lenses.

Another method to measure the axial location of the sample surface relies on reflection from the surface. This may be from the fabrication laser itself (when pulse energy is sub-fabrication threshold) or from an alternative light source (e.g. a laser or LED). The surface of the sample may be located when the reflected signal is maximum.

Another method may include looking at third harmonic generation (THG) from the sample surface, which is again maximised when the surface is in the focus of the lens. An interferometric measurement may be used with the reflected light to give a very accurate measurement of the surface position (an alternative coherent source would be needed for the interferometer).

Another alternative method is imaging the reflection of the laser beam from the diamond surface onto a camera, the transverse displacement of the reflection on the camera allows one to determine the tilt of the sample from a single measurement.

Determining the correction to apply uses at least the measured tilt. It may also include determining a correction based on the depth of the region to be modified below the surface of the sample. Determining a correction may include using information pertaining to the optical properties of the sample material in order to account for refraction.

The method may comprise measuring the position of the sample within the laser system; using also the measured position to determine the correction to be applied; and applying the correction to modify wavefront properties of the laser to counteract an effect of spherical aberration on laser focus. The method may comprise measuring the position of the surface of the sample on which the laser is incident so as to determine a focussing depth. The method may further comprise determining the correction based at least in part on the focussing depth.

Therefore, as well as correcting for coma caused by the tilt of the sample, the correction may account for spherical aberration. The amount of spherical aberration may be proportional to the focussing depth. Spherical aberration distorts a point focus into a cusped shape and by doing so moves a peak intensity of the focus axially towards the aberrating surface and away from its ideal position. A focus which is affected by spherical aberration will therefore have a peak intensity closer to the sample surface. This movement of the focus is also known as defocus. By measuring the position of the sample, the correction may be determined so as to counteract the effects of spherical aberration. The method may comprise changing the axial position of the sample to account for the movement of the peak intensity of the focus. The method may comprise changing the axial position of the sample to account for a defocus component of the spherical aberration.

Hence the method may include applying corrections to account for the effects of both coma and spherical aberration caused by refraction at the sample's surface.

The method may comprise measuring the sample after forming the modified region, and modifying the correction based on the further measurement. The method may comprise measuring the modified region of the sample and modifying the correction based upon the measurement of the modified region. Therefore, the method may include a feedback stage during which the correction is refined e.g. to more closely control the size and shape of the focus, and further reduce the effects of aberration (e.g. coma and/or spherical aberration) on the focus. Refinement of the correction may achieve a larger Strehl ratio. The further measurement may use non-linear photoluminescence excitation which may be from intrinsic defects within the sample. The method may comprise detecting the effects on the sample of the laser modification using photoluminescence, plasma emission or absorption, or reflection or transmission properties.

The step of determining a correction may comprise using the measured tilt in the calculation for correcting the coma, and where applicable the measured position for correcting the spherical aberration. In this way, a tailored correction may be calculated for each sample.

The step of determining a correction may comprise selecting the correction from a database of available corrections. Hence the method may include selecting a specific correction to apply when e.g. the tilt of the sample is within a predetermined range, and/or the position of the sample is within a predetermined range. The database may comprise a plurality of corrections, each for a pre-determined range of factors.

The correction may be defined by an expansion of orthogonal modes. Each mode may define an aberration mode. The correction may be a pure mode, or the correction may be a superposition of modes. The correction may be defined by a Zernike polynomial, or may be defined by an expansion of Zernike polynomials.

The correction may comprise a phase field for modulating a laser beam profile to a desired profile. For example, the method may use a liquid crystal spatial light modulator (SLM) and the correction may represent a display field for an SLM. The method may use a deformable mirror (DM) and the correction may be a configuration for the deformable mirror. The correction may be a configuration for an adaptive lens.

The step of determining a correction may be based at least in part on a pulse energy of the laser. The correction may therefore take into account horizontal and vertical coma, spherical aberration, and pulse energy. The pulse energy may be selected based upon the correction.

The method may comprise determining a pulse energy to be used based on the correction and sample, and may include modifying the sample using a laser pulse of the determined pulse energy.

If the correction is sufficient, the same pulse energy may be used to fabricate anywhere within the sample and give the same result. This is typically the case for the aberration ranges considered in this disclosure. However, if the correction is not sufficient then the pulse energy may be increased.

If the correction is not sufficient, the pulse energy may be raised for fabrication. If the aberration is substantial and the correction is far from sufficient to counteract it completely the pulse energy may be raised substantially. In some materials (e.g. particularly in diamond) if the correction is insufficient, it is not possible to accurately and reliably fabricate no matter how high the pulse energy is raised. For example, at a depth of about 250 $\mu$m in diamond, even if the spherical aberration is perfectly corrected but a small coma aberration (e.g. of about 1rad) is not, single pulse laser fabrication is not experimentally observed. The pulse energy may be raised very high and still fabrication may not be achieved with a single pulse. In such a case, fabrication cannot be achieved deterministically. Instead, the dose (i.e. the number of pulses per modified region) must be increased and the resulting fabrication is large (e.g. greater than 5$\mu$m) and poorly defined. Moreover, the required dose will vary unpredictably at different locations within the diamond.

Determining the correction may comprise optimising a predetermined function. The method may comprise using an algorithm to determine the correction based upon various factors pertaining to the sample in question. The factors may include coma, spherical aberration and pulse energy. Determining the correction may comprise selecting a desired correction from a three-dimensional search space, or a four dimensional search space or a higher-dimensional search space based upon factors including any combination of the vertical coma, horizontal coma, spherical aberration and pulse energy. The method may include minimising a cost function (and/or maximising a merit function).

The method may include simultaneously modifying spatially separate regions within the sample. The method may include consecutively modifying separate regions within the sample using the same pulse energy to modify each region.

The method may comprise laser modifying the sample using a plurality of laser beams and an array of foci. The method may comprise simultaneously modifying spatially separate regions of the sample using respective laser beams. The method may comprise using a plurality of pulses, each pulse from a respective laser beam in order to modify desired regions of the sample. The method may include forming the plurality of beams prior to correction, and hence the method may include using a single optical system to perform aberration correction on a plurality of spatially separate laser beams. The method may include creating the plurality of laser beams such that aberration correction and multiple beam generation are simultaneous.

The step of forming a modified region may include using non-linear optical interactions to cause modification of the material. The method may comprise modifying only material within the bulk of the sample. Hence, the method may include not modifying a surface of the sample. The method may include modifying the sample at a depth of more than 50 micrometres, or more than 150 micrometres, or more than 300 micrometres.

The method may comprise forming complex structures within the sample. For example, the method may comprise forming within the sample an array of features. The method may comprise moving the sample during laser modification to create a line feature within the sample that may be straight or curved or any suitable shape. The method may comprise scanning the laser during laser modification to create a line feature within the sample that may be straight or curved or any suitable shape. The method may comprise forming an optical volume formed of spaced points, and/or may comprise forming a diffractive element. The method may comprise modifying spatially separate regions within the bulk of the material. The method may comprise making visible features within the sample. The method may comprise forming a structure within the sample. The method may comprise forming a large-scale feature, for example greater than 5 micrometres, or greater than 20 micrometres, in at least one dimension. The method may include modifying predetermined regions of the sample to generate a desired stress field within the sample. The method may include creation of features within the sample which shift the phase of incident light, which features may be visible by phase contrast microscopy, or which may scatter the light so that the features may be visible in dark field microscopy. The method may include modifying the refractive index of the sample in a predetermined region, and may achieve this by exposing that region to the laser, or by exposing proximate regions to the laser to change a strain field of the predetermined region to modify its refractive index.

The method may comprise using a high numerical aperture (NA) lens to focus the laser within the sample. This may exacerbate the effects of spherical aberration. The method may comprise using an objective lens without an immersion medium (i.e. a dry lens), or may comprise using an objective lens with an immersion medium (e.g. oil). The method may comprise using an objective lens with a numerical aperture of greater than about 0.5. The method may comprise using an objective lens with a numerical aperture of greater than about 0.8. The method may comprise using an objective lens of greater than 0.8 NA if dry, or greater than 1.2 NA if in an oil immersion.

The method may comprise modifying a gemstone, or may comprise modifying a crystal lattice. In particular, the method may comprise using a sample which comprises diamond. The diamond may be in the form of a gemstone. The method might be used to mark the gemstone e.g., as a security device.

The method may comprise creating electrical conductors within the sample, in particular diamond. The diamond may be a grown diamond substrate. The method may comprise coating the sample (e.g., diamond) in metal, e.g., to provide electrical connections to electrical conductors within the sample. The method may comprise converting carbon from an sp3 phase to an sp2 phase, thereby modifying the diamond structure. The method may include modifying a region within the diamond that meets the diamond surface.

The correction may be defined by an expansion of orthogonal modes. Each mode may define an aberration mode. The correction may be a pure mode, or the correction may be a superposition of modes. The correction may be defined by a Zernike polynomial, or may be defined by an expansion of Zernike polynomials. The correction may be defined as a superposition of modes using an orthogonal basis other than the Zernike polynomials. The correction may be an analytic solution e.g. for a particular geometry, or a numerical solution for a particular focussing geometry. The correction might be determined through an iterative optimisation using a method of focal feedback. The correction may be defined as a superposition of modes using an orthogonal basis other than the Zernike polynomials. The correction may be an analytic solution e.g. for a particular geometry, or a numerical solution for a particular focussing geometry. The correction might be determined through an iterative optimisation using a method of focal feedback.

The method may comprise calculating coefficients of a Zernike expansion in order to characterise the aberration modes and determine a correction. Applying the correction may comprise applying a superposition of Zernike modes thereto. The amplitude of the Zernike modes may be defined by the correction. The correction may be a single mode, or a superposition of modes.

The correction may counteract the effects on the focus of a tilt aberration mode caused by the sample, which tilt aberration mode is distinct from the coma aberration mode caused by tilt of the sample. The different aberration modes are characterised by different orders of phase change that they cause. The tilt aberration mode is characterised by a different order of phase change than coma. The spherical aberration mode is characterised by a different order of phase change than coma and tilt. Determining a correction may comprise determining which aberration modes will be introduced to the laser focus by the sample.

For example, a tilt aberration can be described in the pupil of the optical system as a phase variation proportional to $r\cos(\theta-\varepsilon)$ where $(r, \theta)$ are the polar coordinates in the pupil plane and $\varepsilon$ represents the orientation of the tilt. A coma aberration has components of the form $r^3\cos(\theta-\varepsilon)$ where the phase varies with the third power of the radial coordinate. Higher order radial terms with odd powers may also be present.

The method may comprise using a pulsed laser with pulse energies of between lOnJ and 300nJ. The pulse energies may be between 80nJ to 150nJ. The pulse energy may be greater than the threshold for modification for the sample material. The method may include using a laser with wavelength in the UV, visible, or infrared spectra. The method may include using a laser with a wavelength in the near infrared spectrum.

The method may comprise laser modifying the sample using a single laser pulse. The method may comprise modifying the sample using a plurality of pulses. The pulse may be a femtosecond pulse or a picosecond pulse. The method may include varying the pulse energy between doses.

The method may comprise modifying a region less than 1 micrometre in the propagation direction. The method may comprise modifying a region less than 1 micrometre in each of the x-, y- and z-directions.

The sample bulk may be diamond. The modified region may comprise electrical conductors. The modified region may comprise a security code. The modified region may comprise a diffraction grating. The modified region may be less than 1 micrometre in all dimensions (i.e. less than 1 micrometre in width, height and depth). The modified region may be more than 100 micrometres below the nearest surface of the sample, preferably more than 200 micrometres, and more preferably more than 500 micrometres.

Systems and methods for laser processing at high resolution inside transparent materials are thus provided, which incorporate aberration correction to compensate for effects of refraction at the material surface. The systems use feedback from measurements of the material to optimise the aberration correction and focal intensity to obtain the necessary level of material modification. A particular application is for the fabrication of features inside diamond.

Applications of the disclosed systems and methods include the generation of light guides inside glasses through local increase of the refractive index. Similar structures may be created in crystals such as KDP or lithium niobate using localised increases in refractive index caused by stress fields around damaged tracks in the medium. Microfluidic devices may be created through exposure of glass followed by chemical etching. Nonlinear photopolymerisation may be used to create complex 3D polymer structures from appropriate solutions.

The disclosed systems and methods may be used to create modified regions within a material which are approximately the same size as a diffraction-limited laser focus, which may be less than 1 micrometre in all dimensions.

*Fabrication in diamond*

When femtosecond pulsed lasers are focussed tightly inside diamond, the non-linear optical interactions cause modification of the crystal lattice in various ways, dependent upon the energy density at the focus. At low energies, there is minor disruption of the crystal lattice that can be used to generate colour centres following annealing. At higher energies, there is significant lattice disruption to the extent that there is significant conversion of the carbon from the sp3 phase (diamond crystal structure) to the sp2 phase (graphite). Typically, the laser modified regions take the form of amorphous carbon, which is a combination of the sp2 and sp3 phases.

Fabrication of fine optical features in diamond uses short-pulsed lasers and high numerical aperture (NA) objective lenses. This ensures that features are well confined in three-dimensions within the material and there is no damage to the surface of the material. A single laser exposure can create a point-like feature of modified material. Complex structures, which may be two or three dimensional, can be built up using collections of point-like features. Alternatively, linear structures can be composed of closely spaced features.

There are two regimes for sub-surface laser processing inside diamond: (i) at very low pulse energy the highly non-linear interaction generates an ensemble of lattice vacancies at the laser focus, while (ii) at higher pulse energies, there is break-down of the diamond lattice leaving a conductive graphitic phase. Modifications of Regime (i) are invisible by transmission microscopy and can only be seen in a fluorescence microscope. They are an important precursor for the formation of coherent NV (nitrogen vacancy) centers for quantum applications. Regime (ii) modifications comprise small (<several 100 nm) clusters of sp2 bonded carbon accompanied by micro-cracks in the diamond lattice. Tracing the diamond through the laser focus in Regime (ii) enables the writing of continuous tracks of sp2 bonded carbon which can be used as electrically conductive wires.

The features formed without translation of the diamond during exposure take the form of an ellipsoid. The extent of the modification is longer along the direction of propagation for the fabrication laser and depends upon the NA (numerical aperture) of the objective lens used. The size of the features is also dependent on the pulse energy used and the dosage (number of pulses in the exposure). If the wavefront is well corrected as described here, highly regular modifications can be made from exposure to exposure. If the wavefront is not well corrected as described here, highly irregular modifications (in size and shape) can result from different exposures with the same conditions.

High NA optics (NA>~0.8) are used for fabrication both of features which are not axially extended (<2$\mu$m along the optical axis) but also for reliable fabrication from point to point. Fabrication at lower NA (~0.5) may be possible but is heavily position dependent and inconsistent. At higher NA, the fabrication is highly repeatable over a large volume with exactly the same pulse energy and laser dose. There is no position dependence to the fabrication. This is important to industrial application.

Other demonstrations have consisted of graphitic point-like features in an array. In other applications, continuous graphitic structures have been generated that may be used as electrical conductors.

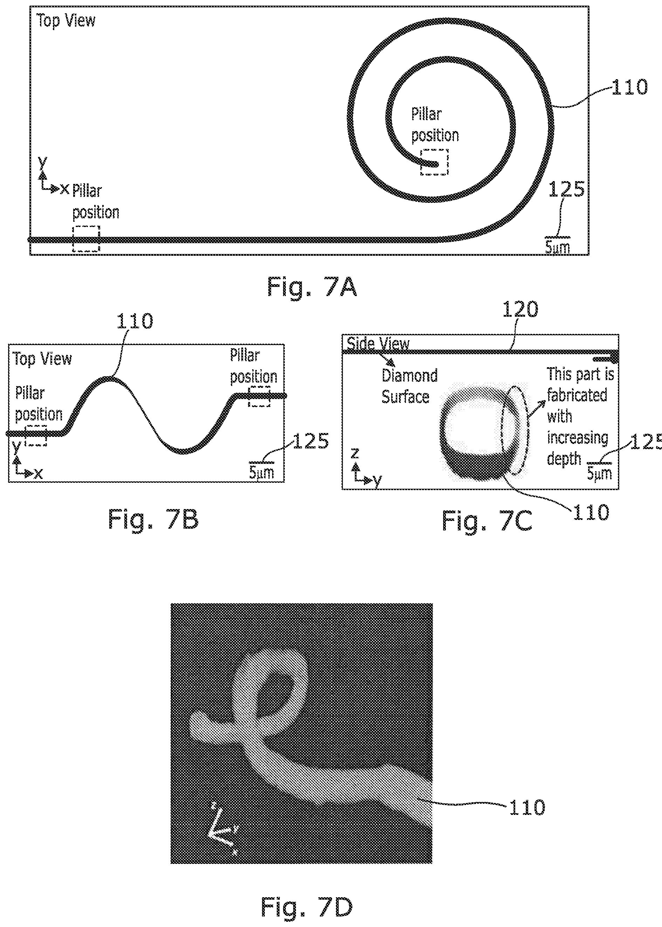

Tracing the diamond through the laser focus (or scanning the laser relative to a fixed diamond sample) enables the creation of continuous tracks of laser modified material. Working in fabrication Regime (ii), these tracks contain sp2 bonded carbon and are electrically conductive. They may be used to form conductive wires that run in 3 dimensions through the diamond. For example, Fig. 7 shows various continuous graphitic tracks 110 following 2D and 3D paths beneath the surface 120 of a diamond sample. Figure 7A shows a top view of the graphitic track 110. Figures 7B and 7C show side views of the graphitic track 110, and Fig. 7D shows an imaged perspective view of the written graphitic track 110. Scale 125 shows 5$\mu$m. The dashed ellipse in Fig. 7C shows a portion of the graphitic track which is fabricated with increasing depth.

Such graphitic tracks 110 may serve as conductive wires and are useful in the manufacture of diamond based sensors for radiation or chemical sensing. In one implementation, wires running through the diamond may have a voltage applied across them to set up a local electric field within the diamond. If ionising radiation is incident on the diamond, it may create free charge on passing through the diamond, which is collected by the electrodes. In another implementation, the embedded wires may be used for electrochemistry, taking advantage of the wide potential window of diamond. The embedded wires can be used to create an electric field near the surface of the diamond, which is then immersed in a solution. Such embedded laser-written wires can be connected to external electronics by bringing them up to the diamond surface, which is subsequently coated in metal for efficient electrical connection.

*Aberration correction*

In the ideal case, the size of the laser focus should be at the diffraction limit i.e. the smallest spot size possible for a given wavelength, refractive index and numerical aperture of the objective lens. However, frequently this limit is not achieved due to the effects of aberrations. Aberrations are deviations of the optical system from its ideal focussing performance. In terms of ray optics, aberrations cause the rays in the focussing cone to no longer meet at the same point. In terms of wave optics, the wavefronts converging on the focus no longer take the form of the spherical cap required for focussing to a diffraction limited spot. In this wave optics case, the aberrations are often quantified in terms of the optical phase error between the ideal and distorted wave front, and different types of distortions are characterised by different phase errors. The effects of aberrations on the focus are to spread out or blur the focus while reducing its peak intensity. By the nature of focussing, the spreading takes place predominantly along the optical axis.

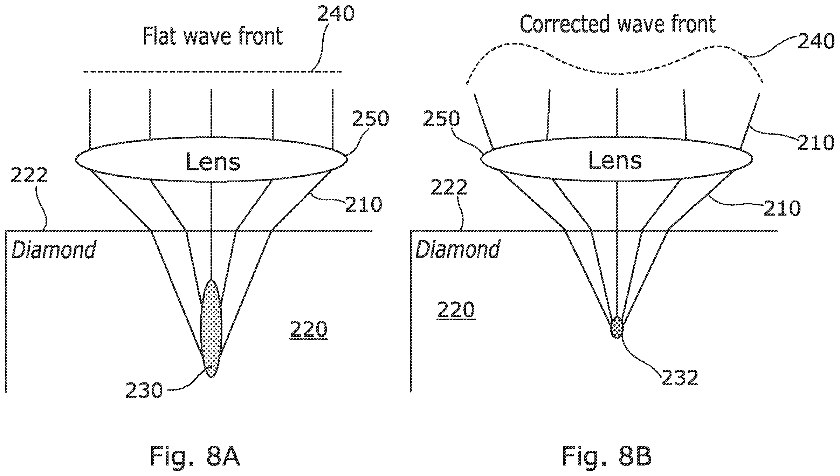

Figure 8A shows an example of a type of particular aberration mode: spherical aberration. In laser fabrication, aberrations frequently occur due to the refraction of rays at the surface of the transparent material inside which one intends to fabricate. This could occur at the interface between, for example, the immersion medium of the objective lens (typically air, oil or other media) and the fabrication material. The light rays 210 which enter the sample 220 are refracted by the sample surface 222 and the resulting focus 230 is distorted and elongated. The flat wavefront 240 means parallel rays 210 enter the high NA lens 250, which would result in ideal focussing if the sample 220 were absent.

Figure 8B shows the case where the wavefront 240 has already been corrected by an active optical element such as an SLM, which has modified its phase to counteract the refraction of the sample surface 222. As a consequence, in the absence of a sample 220 the rays 210 leaving the lens would not result in an ideal focus. However, given the presence of the sample, the rays 210 refract at the surface 222 and result in an improved focus 232. Therefore, by shaping the incident wavefront the aberration is cancelled, allowing accurate focusing and reliable fabrication of sub micrometre features.

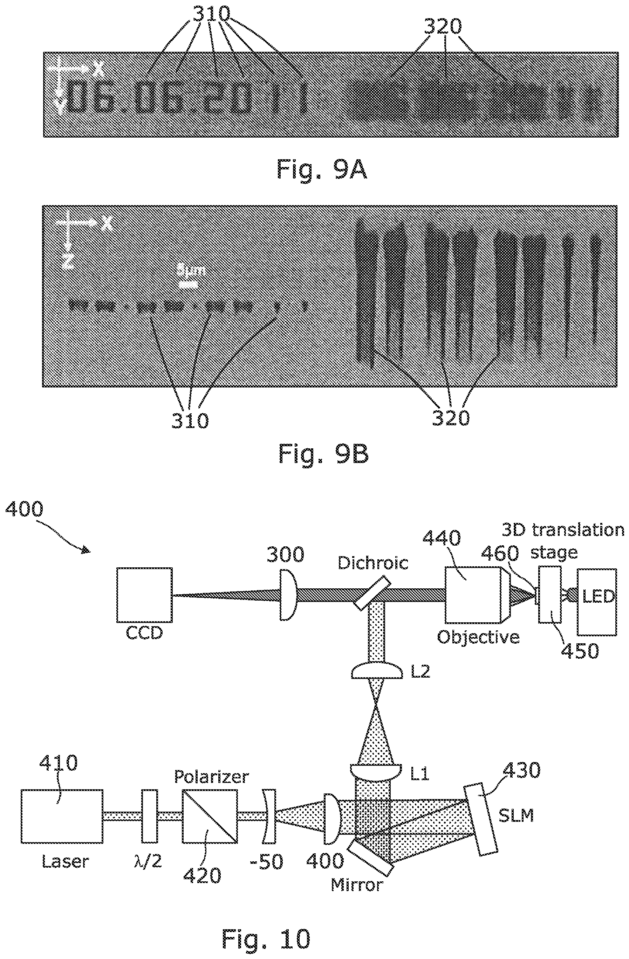

Figure 9A shows fabricated features 310 (left) created by focusing inside diamond at a depth of $50\mu m$ using aberration correction. Features 320 (right) are the same structure but made without aberration correction. The laser pulse energy had to be substantially increased to see any fabrication at all. The fabrication laser was incident along the z-axis. It will be see that the fabrication of features 310 is far better controlled than that of features 320. Figure 9B shows the same features from the side. It will be appreciated that the features created using aberration correction are significantly better controlled in the propagation direction (i.e. the z-direction).

If the interface of the sample is normal to the optical axis, then the aberration consists of a refocusing effect (a focal shift along to optical axis) in addition to spherical aberration. The amplitude of these effects is proportional to the focussing depth. An expression for spherical aberration of this type is:

$$\varphi_{SA}(\rho) = \frac{-2\pi d_{nom}}{\lambda}\left(\sqrt{n_2^2 - (NA\rho)^2} - \sqrt{n_1^2 - (NA\rho)^2}\right)$$

This equation is an analytic description of the spherical aberration phase $\varphi_{SA}$ for light of wavelength $\lambda$ when focusing to a depth $d_{nom}$ inside a material of refractive index $n_1$, using an objective lens with numerical aperture NA and immersion medium $n_1$. The coordinate $\rho$ is the normalised radius in the pupil of the objective lens.

If the surface normal is tilted with respect to the optical axis then other aberrations such as coma (which includes wavefront tilt, causing a lateral focal shift) are introduced. These effects are proportional to both the focussing depth and the angle of surface tilt. The additional aberration due to a small surface tilt is given by:

$$\varphi_{tilt}(\rho, \theta) = \frac{t\, d_{nom}}{\lambda}\left(a\rho + b\rho^3\right)\cos(\theta - \xi)$$

This equation is an analytic description of the aberration component due to surface tilt, where the tilt is at a small angle $t$. $\theta$ is the azimuthal coordinate in the pupil and $\varepsilon$ represents the orientation of the tilt. Factors $a$ and $b$ are scalar coefficients whose values depend upon the refractive indices and NA.

The combination of spherical aberration and coma causes reductions in the focal intensity and distortions of the intensity distribution that affect the fabrication efficiency and precision.

The effects of refraction at the diamond surface are strong, due to the high refractive index of diamond (refractive index of 2.4, compared to 1.0 for air and around 1.5 for immersion oil). This means that aberration correction will allow production of fine features at depths which would otherwise not be possible. Aberrations correction is readily implemented using a liquid crystal spatial light modulator (SLM), but may also be implemented using a deformable mirror. In accordance with configurations of the present specification such active optical elements may be used for spherical aberration correction. Coma aberration is corrected via mechanical movement of the sample and/or optical elements.

While static correction methods are possible, there are indications from various trials that static corrections are not effective at correcting aberrations between nominally similar samples due to slight changes in composition and positioning of the material, and that instead fine-tuned aberration correction is needed.

The aberration correction demands are increased if using a dry objective lens to focus deep into diamond. The aberration correction requirements are less severe using an oil immersion lens to focus the laser, as the refractive index contrast is lower than with a dry lens. However, correction is still required in this case to obtain viable results.

A phase pattern calculated from the above equations can be imparted upon the aberration correction device (i.e. the active optical element) such as a spatial light modulator (SLM) in order to correct for the aberration induced by the sample. As SLMs typically have a phase modulation range limited to one wavelength (or a small number of wavelengths) the phase is usually wrapped so that it lies within the accessible range. For example, if only a single wavelength is accessible, then the phase function applied will be $\varphi_{SA}$ modulo $2\pi$, as $2\pi$ radians of phase corresponds to one wavelength. As previously stated, in accordance with configurations of the present specification such active optical elements may be used for spherical aberration correction while the coma aberration is corrected via mechanical movement of the sample and/or optical elements.

The phase pattern applied to the SLM can be simplified by noting that the spherical aberration term contains defocus, which is another aberration mode or component that shifts the focus (i.e. the peak optical intensity) along the optical axis, but does not change its shape. By removing the defocus component from the correction, the size of the phase correction can be reduced, thus more effectively using the SLM for aberration correction. The defocussing component of the spherical aberration may be compensated by translation of the sample by an appropriate amount.

Instead of using the analytic expressions directly, the aberrations can be considered as a series of basis functions. Commonly, the Zernike polynomials are used for this purpose. Hence, an aberration may be described a sum of aberration modes. For example, spherical aberration may be expressed as an expansion in terms of Zernike polynomials. Using functions such as these aids in the design of feedback systems for the measurement and correction of unknown aberrations.

The methods described herein are further relevant for focussing through non-planar surfaces. This might include through curved surfaces or near/across edges. Again, an accurate premeasurement of the surface topography can be used to predict a starting phase pattern that is close to optimum and can be used as a good starting point for subsequent optimisation using focal feedback. Fabricating across or near an edge involves pupil segmentation. The methods described here can be adopted for setting the phase for correcting spherical and coma aberrations in the segmented pupil. Focussing through a curved surface will require correction of a combination of spherical aberration, astigmatism and coma.

*Adaptive control of the focus*

In order to maintain consistent quality of fabrication between different positions (particularly depths) within a sample and between different samples, it is necessary to implement an adaptive control system that can maintain an appropriate combination of aberration correction and pulse energy. This may use a method of feedback from the focal region to the devices controlling the wavefront and energy.

A first measurement of surface position and tilt based upon reflection from the material surface as described above provides a prediction of the correction needed to counteract spherical aberration and coma. In one implementation, a measurement of the position for best optical focus at three points which are not all on the same axis can provide information on the relative sample tilt. This can allow predictive aberration correction for coma and spherical aberration at a particular depth in a sample, e.g. diamond.

Finer compensation may be carried out by observation through a microscope of the fabrication process at the focus. A combination of measurements is possible. Using a transmission microscope it is possible to observe changes in absorption at the focus or a change in optical phase due to refractive index modification. This indicates the degree to which the material is modified by the laser pulse and can provide a feedback signal for optimisation of the aberration correction and the pulse energy. Alternative feedback signals could be provided by photoluminescence or plasma emission from the focus.

In order to reduce the number of measurements required (and hence the time taken) for the optimisation process, algorithms can be used in which coefficients of the aberration modes (particularly spherical aberration and coma) and the pulse energy are considered as unknown coordinates in a search space.

The optimisation process can be expressed mathematically as the minimisation of a cost function $f$ (or alternatively, g may be a merit function that should be maximised) that is related to the aberration components and the pulse energy, collectively represented by the symbol P. The optimal value of P is given by either

$$P_{opt} = \arg\min_{P}[f(P)]$$

where the cost function should be minimised or

$$P_{opt} = \arg\max_{P}[g(P)]$$

where the merit function should be maximised. The function $f$ or $g$ can be defined as a combination of measurements. For example, the intensity of the focal plasma generated during laser fabrication is dependent upon the total aberration content, so that a corrected system shows a maximum in focal plasma emission.

Alternatively, the fabrication laser may be used below the threshold for structural modification to non-linearly excite photoluminescence (PL) from intrinsic defects contained in the sample. The detected PL is maximised when the aberrations are minimised. Similarly, luminescence or fluorescence emission in a confocal microscope is maximised when the aberrations are corrected. These signals can therefore be used as a feedback mechanism to allow optimisation of the cost/merit function.

Various methods are possible for the implementation of optimisation processes. The minimum number of unknown parameters that need to be optimised for laser fabrication through a tilted flat surface, where the refractive indices and NA are known, is three: one coefficient of spherical aberration, and two for coma (*i.e.* the two orthogonal coma components). The process may therefore be considered as a three-dimensional optimisation problem. Another variable in the form of pulse energy can be considered, which then extends the process to a four-dimensional optimisation. If there are further unknowns, then more variables (dimensions) would have to be considered in the optimisation process.

Adaptive optimisation could be performed on a point-by-point basis for every fabricated position, though it is likely to be more practical to perform fewer optimisation measurements across the field of fabrication and perform interpolation of parameters across this field. This field could exist in a line or curve, a lateral plane, or extend through three dimensions. With sufficient surface measurements, a suitably corrected focus (i.e. with a sufficiently large Strehl ratio) can be achieved. However, an optimisation procedure may be performed for each new sample.

*Larger scale markings*

Larger scale structures and markings are also possible. This might include point like features or continuous lines to create alphanumeric characters, barcodes, QR codes™ or images. Such features could be grouped together to form diffractive elements, holograms, or diffraction gratings. Depth ranges and areas can be up to the size of the stone being used (typically in the range of 3mm in the transverse $x$- and $y$-directions, and 1mm in the propagation z-direction). The size of the features may be up to $5\mu m$ across (in $x$- and $y$-directions) by $20\mu m$ in the propagation $z$- direction. In practice, if larger features are to be created reliably, it may be achieved by stitching together combinations of smaller scale modifications. Care must be taken when generating large features to manage the stress load on the surrounding sample (e.g. diamond) to avoid large scale irregular cracks forming. This might be achieved by a sparse array of small (~$1\mu m$ scale) features that are linked together to form a feature that looks large when viewed optically but only has minimal volume conversion of diamond to graphite.

*Laser System*

Figure 10 shows a configuration for a laser system. Additional components might be added in order to, for example, aid with the aberration or position sensing, to perform additional aberration correction, or to parallelize the system and use multiple focal spots.

The laser system 400 includes a laser 410, a polarizer 420, a spatial light modulator (SLM) 430, a high NA objective lens 440, and a three-dimensional translation stage 450. A sample 460 is positioned on the stage 450 at the focus of the system 400.

The sample 460 is diamond and is positioned in the laser system 400 for modification by the laser 410. The sample 460 is then measured to inform the determination of a correction. Particularly the surface of the sample 460 on which the laser will be incident is measured and its inclination from transverse is determined. The transverse direction is the 2D plane perpendicular to the primary propagation direction of the laser. This is also the plane parallel to the major plane of the objective lens.

The inclination of the surface of the sample 460 is used to determine the expected coma aberration which will be caused thereby on the laser focus. The expected aberration is then characterised in terms of a Zernike mode, and is communicated to the SLM. The SLM is modified to display the required phase correction to modify the laser to counteract the aberration. In accordance with configurations as described herein, the SLM can correct for spherical aberration while the coma aberration is corrected via mechanical movement of the sample and/or optical elements.

The pulse energy of the laser system is also determined based upon the correction. The laser is set to the required pulse energy, and is then used to modify the diamond sample.

Following modification, the modified region of the sample is measured using transmission microscopy. The determined correction is then refined based upon the feedback obtained by this further measurement. The refined correction is applied and the sample is laser modified.

*Example*

The diamond is mounted in the laser fabrication system. The objective lens is moved axially (*i.e.* in the *z*-direction) to initially find the diamond surface by maximising the reflected light from an LED. The diamond is moved in the transverse (*x-y*) directions to the desired location for fabrication.

The fine positioning for the surface axial (*z*) location is achieved using the laser with low pulse energy (significantly below the bulk graphitisation threshold, *e.g.* less than 30nJ). The sample surface is found by translating the diamond axially in 100nm steps. If using an oil immersion lens, the diamond is moved to the point at which the laser no longer boils the immersion oil. If using an air lens, the diamond is moved until the laser no longer causes any mark on the diamond surface. A further two such measurements are made, one by translating 0.2mm in the x-direction, the other by translating 0.2mm in the *y*-direction. These measurements cover an area of the sample and are used to determine the local surface tilt.

The diamond is then translated axially to the desired depth for fabrication, noting that the actual fabrication depth is greater than the translation depth by a factor of approximately 2 for high NA oil lenses and about 2.7 for a high NA air lens. This is because the SLM is used to correct for aberrations caused by refraction at the sample interface, except defocus, which is more simply counteracted by axial translation of the diamond, as described above. The aberration correction is applied to the SLM based upon the surface measurements. The correction represents a spherical aberration correction based upon the translated axial depth. Coma aberration in the *x* and *y* directions is corrected for by mechanically removing the tilt angle or moving the optical elements to counteract the coma aberration based upon the measured *x* and *y* surface tilt. A predetermined pulse energy (e.g. 100nJ for a 1.4NA oil lens using 780nm wavelength light with pulse duration 250fs) is used and a burst of 5 pulses is fired into the diamond. A transmission microscope is used to verify that there has been successful modification of the diamond at the desired point. The preferred fabrication should have dimensions of approximately $0.5\mu$m (in the transverse direction) by approximately $1\mu$m (in the axial direction) and will appear dark when viewed in a transmission microscope.

Aberrations also need to be compensated in the imaging in order to see the fabrication. Then it is verified that the diamond can still be modified with lower pulse energy and/or dose to the point that the modification becomes invisible. The desired pattern is then fabricated within the diamond as desired.

If no modification is visible when the diamond is irradiated with the first burst of pulses, the sample is translated a small distance in the transverse direction (e.g. $5\mu$m) and the aberration modes are adjusted in a systematic manner with a burst of the laser applied for each setting. The diamond is axially translated between each burst and checked to see whether the diamond is modified as desired. Once the correct settings are achieved, the fabrication is carried out straightforwardly as described above without need for further correction.

Other metrics might be used to optimise the aberration corrections other than visible diamond modification, for example non-linear photoluminescence from the diamond caused by the laser focus might be optimised to correct the aberrations. For this measurement the laser pulse energy is dropped to ensure there is no fabrication (pulse energy below e.g. 20nJ using conditions described above) or ideally by switching to a laser with a higher repetition rate and low pulse energy (80MHz rep rate and pulse energy <20nJ). The characteristics of the focus may be measured and the aberrations affecting it determined. Then a correction can be determined and applied to the active optical element to improve the Strehl ratio of the focus. The need for such a procedure of adaptive correction may be rare given accurate measurements of the surface.

The above method may use a femtosecond infra-red fabrication laser, but the techniques may also be applied to fabrication systems of any wavelength or any pulse width. For example ultraviolet (UV) and continuous-wave (CW) systems can be used. Typically the fabrication laser induces an increase in refractive index of the sample. However in some materials the laser can induce a decrease in refractive index. The optical devices manufactured may operate at a different wavelength to the writing laser. Devices may be manufactured for any operating wavelength of the optical device.

**Claims**

1. A laser system (400) for modification of a sample (460) to form a modified region at a target location within the sample, the target location being disposed below a surface of the sample, the laser system comprising:

   a laser light source (410) configured to provide laser light;
   a sample holder (450) for supporting the sample;
   one or more optical elements (420,430,440) configured to direct the laser light from the laser light source into the sample when the sample is supported by the sample holder, wherein the one or more optical elements (420,430,440) are configured to focus the laser light into the sample, and wherein the one or more optical elements includes a component (430) configured to correct for spherical aberration caused by mismatch in refractive index at the surface of the sample through which the laser light enters the sample such that the laser light is focused at the target location within the sample, **characterised by**:

   a tilt measurement device configured to measure a tilt angle of the surface of the sample (460) relative to an optical axis of the laser light entering through the surface,
   and a drive mechanism for moving the sample holder (450) and/or one or more of the optical elements (420,430,440) based on the measured tilt angle to correct for coma aberration caused by the tilt angle.

2. A laser system according to claim 1,
   wherein the drive mechanism is configured to move the sample holder (450) based on the measured tilt angle to reduce the tilt angle of the surface of the sample and thus correct for coma aberration.

3. A laser system according to claim 1 or 2,
   wherein the drive mechanism is configured to move one or more of the optical elements (420,430,440):

   • in order to tilt the optical axis of the laser light entering through the surface of the sample thus reducing the tilt angle and correcting for coma aberration, and/or
   • to create an amount of coma which cancels sample induced coma aberration caused by the tilt angle.

4. A laser system according to any preceding claim,
   wherein the one or more optical elements (420,430,440) includes at least one of:

   • a lens with an adjustable correction collar to correct for spherical aberration within the sample at the target location, or
   • a lens with a fixed correction for spherical aberration within the sample at the target location, or
   • a lens and a phase plate configured to correct for spherical aberration within the sample at the target location, or
   • a combination of lenses configured to introduce a spherical aberration in the laser light which is partially or wholly cancelled by spherical aberration caused by mismatch in refractive index at the surface of the sample, or
   • an adaptive optical element (430) configured to correct for spherical aberration within the sample at the target location, wherein the adaptive optical element optionally includes a spatial light modulator.

5. A laser system according to any preceding claim,
   wherein the one or more optical elements (420,430,440) are pre-configured to correct for spherical aberration within a specific type of material at a fixed target depth.

6. A laser system according to any one of claims 1 to 4,
   wherein the one or more optical elements (420,430,440) are adjustable to correct for spherical aberration within different sample materials and/or at different target depths.

7. A laser system according to claim 6,
   further comprising a spherical aberration controller configured to automatically adjust the one or more optical elements (420,430,440) to correct for spherical aberration based on one or both of a database of available corrections and an optical measurement of the sample.

8. A laser system according to any preceding claim,
   wherein the laser light source (410) is configured to provide:

- sub-10 picosecond pulsed laser light, and/or
- pulsed laser light with pulse energies of between lOnJ and 300nJ.

9. A laser system according to any preceding claim,
   wherein the one or more optical elements (420,430,440) are configured to focus the laser light within the sample with a numerical aperture of at least 0.8, 1, or 1.2.

10. A laser system according to any preceding claim,
    wherein the laser system is configured to mark gemstones, optionally diamonds.

## Patentansprüche

1. Ein Lasersystem (400) zum Modifizieren einer Probe (460), um einen modifizierten Bereich an einem Zielort innerhalb der Probe zu bilden, wobei der Zielort unter einer Oberfläche der Probe angeordnet ist, wobei das Lasersystem Folgendes beinhaltet:

   eine Laserlichtquelle (410), die konfiguriert ist, um Laserlicht bereitzustellen;
   einen Probenhalter (450) zum Tragen der Probe;
   ein oder mehrere optische Elemente (420, 430, 440), die konfiguriert sind, um das Laserlicht von der Laserlichtquelle in die Probe zu leiten, wenn die Probe durch den Probenhalter getragen wird, wobei das eine oder die mehreren optischen Elemente (420, 430, 440) konfiguriert sind, um das Laserlicht in die Probe zu fokussieren, und wobei das eine oder die mehreren optischen Elemente eine Komponente (430) umfassen, die konfiguriert ist, um sphärische Aberration, die durch eine Brechungsindex-Fehlanpassung an der Oberfläche der Probe, durch die das Laserlicht in die Probe eintritt, bewirkt wird, zu korrigieren, sodass das Laserlicht an dem Zielort innerhalb der Probe fokussiert wird, **gekennzeichnet durch**:

   eine Kippmessungsvorrichtung, die konfiguriert ist, um einen Kippwinkel der Oberfläche der Probe (460) relativ zu einer optischen Achse des Laserlichts, das durch die Oberfläche eintritt, zu messen,
   und einen Antriebsmechanismus zum Bewegen des Probenhalters (450) und/oder eines oder mehrerer der optischen Elemente (420, 430, 440) basierend auf dem gemessenen Kippwinkel, um Komaaberration, die durch den Kippwinkel bewirkt wird, zu korrigieren.

2. Lasersystem gemäß Anspruch 1,
   wobei der Antriebsmechanismus konfiguriert ist, um den Probenhalter (450) basierend auf dem gemessenen Kippwinkel zu bewegen, um den Kippwinkel der Oberfläche der Probe zu reduzieren und folglich Komaaberration zu korrigieren.

3. Lasersystem gemäß Anspruch 1 oder 2,
   wobei der Antriebsmechanismus konfiguriert ist, um eines oder mehrere der optischen Elemente (420, 430, 440) zu bewegen:

   • um die optische Achse des Laserlichts, das durch die Oberfläche der Probe eintritt, zu kippen, wodurch der Kippwinkel reduziert wird und die Komaaberration korrigiert wird, und/oder
   • eine Menge an Koma zu schaffen, die probeninduzierte Komaaberration, die durch den Kippwinkel bewirkt wird, ausgleicht.

4. Lasersystem gemäß einem der vorhergehenden Ansprüche,
   wobei das eine oder die mehreren optischen Elemente (420, 430, 440) mindestens eines von Folgendem umfassen:

   • eine Linse mit einem einstellbaren Korrekturring, um sphärische Aberration innerhalb der Probe an dem Zielort zu korrigieren, oder
   • eine Linse mit einer festen Korrektur für sphärische Aberration innerhalb der Probe an dem Zielort oder
   • eine Linse und eine Phasenplatte, die konfiguriert sind, um sphärische Aberration innerhalb der Probe an dem Zielort zu korrigieren, oder
   • eine Kombination von Linsen, die konfiguriert ist, um eine sphärische Aberration in das Laserlicht einzubringen, die teilweise oder vollständig durch sphärische Aberration ausgeglichen wird, die durch eine Brechungsindex-Fehlanpassung an der Oberfläche der Probe bewirkt wird, oder

• ein adaptives optisches Element (430), das konfiguriert ist, um sphärische Aberration innerhalb der Probe an dem Zielort zu korrigieren, wobei das adaptive optische Element optional einen räumlichen Lichtmodulator umfasst.

5. Lasersystem gemäß einem der vorhergehenden Ansprüche, wobei das eine oder die mehreren optischen Elemente (420, 430, 440) vorkonfiguriert sind, um sphärische Aberration innerhalb eines spezifischen Typs von Material in einer festen Zieltiefe zu korrigieren.

6. Lasersystem gemäß einem der Ansprüche 1 bis 4, wobei das eine oder die mehreren optischen Elemente (420, 430, 440) einstellbar sind, um sphärische Aberration innerhalb unterschiedlicher Probematerialien und/oder in unterschiedlichen Zieltiefen zu korrigieren.

7. Lasersystem gemäß Anspruch 6, das ferner eine Steuerung für sphärische Aberration beinhaltet, die konfiguriert ist, um das eine oder die mehreren optischen Elemente (420, 430, 440) automatisch einzustellen, um sphärische Aberration basierend auf einem oder beiden von einer Datenbank verfügbarer Korrekturen und einer optischen Messung der Probe zu korrigieren.

8. Lasersystem gemäß einem der vorhergehenden Ansprüche, wobei die Laserlichtquelle (410) konfiguriert ist, um Folgendes bereitzustellen:

• gepulstes Sub-10-Pikosekunden-Laserlicht und/oder
• gepulstes Laserlicht mit Impulsenergien zwischen 10 nJ und 300 nJ.

9. Lasersystem gemäß einem der vorhergehenden Ansprüche, wobei das eine oder die mehreren optischen Elemente (420, 430, 440) konfiguriert sind, um das Laserlicht innerhalb der Probe mit einer numerischen Apertur von mindestens 0,8, 1 oder 1,2 zu fokussieren.

10. Lasersystem gemäß einem der vorhergehenden Ansprüche, wobei das Lasersystem konfiguriert ist, um Edelsteine, optional Diamanten, zu markieren.

## Revendications

1. Un système laser (400) destiné à la modification d'un échantillon (460) afin de former une zone modifiée à un emplacement cible à l'intérieur de l'échantillon, l'emplacement cible étant disposé en dessous d'une surface de l'échantillon, le système laser comprenant :

une source de lumière laser (410) configurée pour produire de la lumière laser ;
un porte-échantillon (450) destiné à soutenir l'échantillon ;
un ou plusieurs éléments optiques (420, 430, 440) configurés pour diriger la lumière laser provenant de la source de lumière laser dans l'échantillon lorsque l'échantillon est soutenu par le porte-échantillon, les un ou plusieurs éléments optiques (420, 430, 440) étant configurés pour focaliser la lumière laser dans l'échantillon, et les un ou plusieurs éléments optiques incluant un composant (430) configuré pour corriger une aberration sphérique provoquée par une disparité d'indice de réfraction à la surface de l'échantillon par laquelle la lumière laser pénètre l'échantillon de telle sorte que la lumière laser soit focalisée à l'emplacement cible à l'intérieur de l'échantillon, **caractérisé par** :

un dispositif de mesure d'inclinaison configuré pour mesurer un angle d'inclinaison de la surface de l'échantillon (460) relativement à un axe optique de la lumière laser pénétrant par la surface,
et un mécanisme d'entraînement destiné à déplacer le porte-échantillon (450) et/ou un ou plusieurs des éléments optiques (420, 430, 440) sur la base de l'angle d'inclinaison mesuré afin de corriger une aberration de coma provoquée par l'angle d'inclinaison.

2. Un système laser selon la revendication 1, dans lequel le mécanisme d'entraînement est configuré pour déplacer le porte-échantillon (450) sur la base de l'angle d'inclinaison mesuré afin de réduire l'angle d'inclinaison de la surface de l'échantillon et dès lors corriger une aberration de coma.

**3.** Un système laser selon la revendication 1 ou la revendication 2,
dans lequel le mécanisme d'entraînement est configuré pour déplacer un ou plusieurs des éléments optiques (420, 430, 440) :

- dans le but d'incliner l'axe optique de la lumière laser pénétrant par la surface de l'échantillon, réduisant dès lors l'angle d'inclinaison et corrigeant une aberration de coma, et/ou
- afin de créer une quantité de coma qui annule une aberration de coma induite par l'échantillon provoquée par l'angle d'inclinaison.

**4.** Un système laser selon n'importe quelle revendication précédente,
dans lequel les un ou plusieurs éléments optiques (420, 430, 440) incluent au moins un élément parmi :

- une lentille dotée d'une bague de correction réglable afin de corriger une aberration sphérique à l'intérieur de l'échantillon à l'emplacement cible, ou
- une lentille dotée d'une correction d'aberration sphérique fixe à l'intérieur de l'échantillon à l'emplacement cible, ou
- une lentille et une lame de phase configurée pour corriger une aberration sphérique à l'intérieur de l'échantillon à l'emplacement cible, ou
- une combinaison de lentilles configurée pour introduire une aberration sphérique dans la lumière laser qui est partiellement ou complètement annulée par une aberration sphérique provoquée par une disparité d'indice de réfraction à la surface de l'échantillon, ou
- un élément optique adaptatif (430) configuré pour corriger une aberration sphérique à l'intérieur de l'échantillon à l'emplacement cible, l'élément optique adaptatif incluant facultativement un modulateur spatial de lumière.

**5.** Un système laser selon n'importe quelle revendication précédente,
dans lequel les un ou plusieurs éléments optiques (420, 430, 440) sont préconfigurés pour corriger une aberration sphérique à l'intérieur d'un type spécifique de matériau à une profondeur cible fixe.

**6.** Un système laser selon l'une quelconque des revendications 1 à 4,
dans lequel les un ou plusieurs éléments optiques (420, 430, 440) sont réglables pour corriger une aberration sphérique à l'intérieur de différents matériaux d'échantillon et/ou à différentes profondeurs cibles.

**7.** Un système laser selon la revendication 6,
comprenant en outre un contrôleur d'aberration sphérique configuré pour régler automatiquement les un ou plusieurs éléments optiques (420, 430, 440) afin de corriger une aberration sphérique sur la base soit d'une base de données de corrections disponibles, soit d'une mesure optique de l'échantillon, soit des deux.

**8.** Un système laser selon n'importe quelle revendication précédente,
dans lequel la source de lumière laser (410) est configurée pour produire :

- de la lumière laser pulsée à impulsions inférieures à 10 picosecondes, et/ou
- de la lumière laser pulsée à énergies d'impulsion comprises entre 10 nJ et 300 nJ.

**9.** Un système laser selon n'importe quelle revendication précédente,
dans lequel les un ou plusieurs éléments optiques (420, 430, 440) sont configurés pour focaliser la lumière laser à l'intérieur de l'échantillon avec une ouverture numérique d'au moins 0,8, 1, ou 1,2.

**10.** Un système laser selon n'importe quelle revendication précédente,
le système laser étant configuré pour marquer des gemmes, facultativement des diamants.

Fig. 1

Laser

Optical
element 1

Sample
holder

Optical
element 2

Sample

Fig. 2

Laser

Optical
element 1

Optical
element 2

Sample
holder

Sample

Fig. 3

Fig. 4

Laser

Optical
element 3

Optical
element 1

Optical
element 2

Sample

Sample
holder

Fig. 5

Depth 1
eg 100μm

~10μm

A

B

Depth 2
eg 200μm

~10μm

C

D

Fig. 6

**Fig. 7A**

**Fig. 7B**

**Fig. 7C**

**Fig. 7D**

Fig. 8A

Fig. 8B

EP 3 921 111 B1

Fig. 9A

Fig. 9B

Fig. 10

**EP 3 921 111 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017130111 A1
- US 4200506 A

**Non-patent literature cited in the description**

- **SIMMONDS et al.** *Optical Express,* 12 November 2011, vol. 19